# EUROPÄISCHE PATENTANMELDUNG

(11) **EP 3 469 915 A1**
(43) Veröffentlichungstag der Anmeldung: **17.04.2019**
(21) Anmeldenummer: 18198158.0
(22) Anmeldetag: 02.10.2018
(51) Int. Cl.: A23G 3/38, A23G 3/42, A23G 3/54

(54) **SÜSSWARE UND HERSTELLVERFAHREN FÜR EINE SÜSSWARE**

(30) Priorität: 13.10.2017 DE 102017123932
(71) Anmelder: sportpraline.com GmbH, 86356 Neusäß (DE)
(72) Erfinder: Fitz, Leonhard, 86356 Neusäß (DE)
(74) Vertreter: Laufhütte, Dieter

(57) **Zusammenfassung**

Die Erfindung betrifft eine Süßware, umfassend: Wasser, einen Zuckeralkohol, und ein Verdickungsmittel, wobei der Zuckeralkohol in 20°C warmen Wasser eine Löslichkeit aufweist, die kleiner oder gleich 500 Gramm pro ein Liter Wasser ist, und das Mengenverhältnis von Zuckeralkohol zu Wasser so gewählt ist, dass doppelt so viel oder mehr als doppelt so viel Zuckeralkohol vorhanden ist wie vollständig in der vorhandenen Mengen an Wasser bei 20°C lösbar ist. Daneben betrifft die Erfindung ein Herstellverfahren für ein Süßware.

## Beschreibung

Die vorliegende Erfindung betrifft eine Süßware und ein Herstellverfahren für eine Süßware.

Es ist ein beständiges Ziel der Lebensmittelindustrie Süßwaren herzustellen, die lediglich eine geringe Kalorienanzahl aufweisen aber dennoch den gleichen süßen Geschmack wie "herkömmliche" mit normalem weißen Zucker gesüßte Süßwaren haben.

Hierfür wurde in der Vergangenheit typischerweise der kalorienintensive Haushaltszucker (Saccharose) durch Ersatzstoffe wie Süßstoffe oder Zuckeralkohole ersetzt. Problematisch hieran ist, dass dabei oftmals nicht derselbe mit Haushaltszucker einhergehende Geschmack erreicht wird oder sich beim Verzehr der alternativ gesüßten Waren ein anderes Mundgefühl einstellt. Dies führt zu einer insgesamt verringerten Akzeptanz der alternativ gesüßten Süßwaren und dazu, dass die Kunden oftmals dennoch zum Verzehr von kalorienintensiven Süßwaren neigen.

Um eine Süßware mit niedrigen Werten in Sachen Kalorien, Zucker und Fett zu erreichen, ist es erforderlich einen hohen Wasseranteil und einen hohen Zuckeralkoholanteil aufzuweisen. Dadurch ergibt sich eine ausreichende Süße in Verbindung mit einem niedrigen Kalorienwert.

Problematisch hierbei ist, dass einige der besonders zuckerähnlich schmeckenden Zuckeralkohole, wie bspw. Erythritol oder auch Mannit, Maltit oder Lactit, eine sehr viel geringere Löslichkeit in Wasser haben als gewöhnlicher Haushaltszucker (Saccharose). So besitzt Mannit beispielsweise eine Löslichkeit von 216 Gramm pro Liter in 25 Grad Celsius warmen Wasser und Erythrit eine Löslichkeit von 100 Gramm pro Liter in 20 Grad Celsius warmen Wasser. Saccharose hingegen hat eine Löslichkeit von 1970 Gramm pro Liter in 20 Grad warmen Wasser. In 100 Grad Celsius warmen Wasser liegt die Löslichkeit von Saccharose bei 4870 Gramm pro Liter Wasser. Es ist demnach möglich, eine sehr viel größere Menge an Saccharose in Wasser aufzulösen und dementsprechend eine sehr viel stärkere Süße pro Mengeneinheit Wasser im gelösten Zustand in einer Süßware unterzubringen.

Möchte man nun in einer Süßware trotz der schlechten Löslichkeit in Wasser einen gegenüber Saccharose in der Löslichkeit verminderten Zuckeralkohol verwenden (bspw. Erythritol mit einer Löslichkeit von 100 g/l Wasser bei 20 °C), ergibt sich bei den für eine ausreichende Süße erforderlichen Mischverhältnissen von Zuckeralkohol zu Wasser von bspw. 1:2 ein knirschendes oder auch sandiges Mundgefühl beim Verzehr der Süßware. Diese nachteilhaften Effekte sind bedingt durch das nicht vollständige Lösen des Zuckeralkohols in dem Wasser, das am Beispiel von Erythrit nur bei einem Mischverhältnis zu Wasser bei 1:10 (Erythrit: Wasser; bei 20°C) zu erreichen wäre. Auch das Sieben von dem verwendeten Zuckeralkohol oder das Verarbeiten von Zuckeralkohol in Pulverform verschafft hierbei keine Abhilfe.

Insgesamt steht der besonders kalorienarmen Süßware daher das als unangenehm empfundene Mundgefühl beim Verzehr der Süßware entgegen, die die Akzeptanz einer solchen Süßware bedeutend einschränkt und einen genussvollen Verzehr nicht ermöglicht.

Es ist daher das Ziel der vorliegenden Erfindung die oben aufgeführten Probleme aus dem Stand der Technik zu überwinden und eine Süßware zu schaffen, die geringe Kalorien besitzt und beim Verzehr gleichzeitig ein einwandfreies, angenehmes Mundgefühl zulässt.

Dies gelingt mit einer Süßware, die sämtliche Merkmale nach dem Anspruch 1 aufweist.

Die erfindungsgemäße Süßware, umfasst dabei Wasser, einen Zuckeralkohol, und ein Verdickungsmittel, wobei der Zuckeralkohol in 20°C warmen Wasser eine Löslichkeit aufweist, die kleiner oder gleich 500 Gramm pro ein Liter Wasser ist, und das Mischungsverhältnis oder Mengenverhältnis von Zuckeralkohol zu Wasser so gewählt ist, dass doppelt so viel oder mehr als doppelt so viel Zuckeralkohol vorhanden ist wie vollständig in der vorhandenen Mengen an Wasser bei 20 °C lösbar ist.

Von der Erfindung ist auch umfasst, dass das Wasser in Form einer wässrigen Lösung vorliegt, bspw. einer stark verdünnten wässrigen Lösung. Auch Flüssigkeiten die Wasser enthalten, wie Orangensaft oder Milch, sind vom Anspruchsumfang umfasst.

Wie einleitend beschrieben würde ein Zuckeralkohol mit der vorstehend bezeichneten Löslichkeit in Wasser, die sehr viel geringer ist als diejenige von Saccharose, und dem angegebenen Mischungsverhältnis, das ein vollständiges Auflösen des Zuckeralkohols in Wasser nicht erlaubt, zu einem knirschenden oder sandigen Mundgefühl beim Verzehr führen.

Die Erfindung sieht nun vor, ein Verdickungsmittel hinzuzugeben, so dass kein übersättigtes Zuckeralkohol-Wasser-Gemisch entsteht, sondern das Wasser in dem Verdickungsmittel gebunden ist, wodurch beim Verzehr das sandige Mundgefühl nicht mehr existent ist.

Es entsteht somit kein übersättigtes Zuckeralkohol-Wasser-Gemisch, das durch die Sedimentation des Zuckeralkohols ein inhomogenes Gemisch bildet, welches wiederum zum sandigen Mundgefühl führt.

Ein Teil des Zuckeralkohols wird in seiner wässrigen Lösung durch das Verdickungsmittel gebunden und der restliche Teil ordnet sich ungelöst in der dreidimensionalen Netzstruktur des gebildeten Hydrogels (erzeugt durch das Verdickungsmittel und das Wasser) an. Dadurch kann der Effekt simuliert werden, dass immer nur eine gewisse Menge an ungelöstem Zuckeralkohol beim Kau- oder Lutschvorgang im Mund auftritt und dadurch das sandige Gefühl nicht mehr existent ist. Das Sediment wird folglich gezielt separiert und angeordnet.

Vorzugsweise tritt dieser Effekt bei der Kombination von Wasser, Erythrit und Flohsamenschalen auf. Bevorzugterweise bei der Kombination von Wasser, Erythrit, Flohsamenschalen und Lupinenmehl. Weiter vorteilhaft an den vorstehenden Kombinationen ist, dass die beschriebenen Effekte ohne das Vorhandensein von chemischen Zusatzstoffen erreicht werden, die eine erheblich geringere Akzeptanz bei den Verbrauchern aufweisen und eine viel größere Unverträglichkeit besitzen.

Nach einer vorteilhaften Modifikation der in Anspruch 1 beschriebenen Erfindung ist vorgesehen, dass das Wasser in dem Verdickungsmittel teilweise oder vollständig gebunden ist, so dass eine Übersättigung einer Zuckeralkohol-Wasser-Mischung nicht auftritt.

Nach einer bevorzugten Ausführungsform kann vorgesehen sein, dass der in der Süßware vorhandene Zuckeralkohol keine Lösung mit dem vorhandenen Wasser in der Süßware eingeht. Es kann aber auch vorgesehen sein, dass der Zuckeralkohol sich in einem ungelösten Zustand in der Süßware befindet.

Wie oben aufgeführt, hängt das angegebene Mengenverhältnis von Zuckeralkohol und Wasser von der Löslichkeit des Zuckeralkohols in Wasser ab. Nachfolgend sind dabei einige vorteilhafte Verhältnisse von Zuckeralkohol zu Wasser angegeben, die je nach der Löslichkeit des Zuckeralkohols in Wasser (bei 20°C) variieren.

Bei einem Zuckeralkohol mit einer Löslichkeit von ≤ 500 g/l in Wasser bei 20°C soll ein Mischungsverhältnis oder Mengenverhältnis von Zuckeralkohol zu Wasser von 1:1 oder größer (1:0,9; 1:0,8;...) in der Süßware vorhanden sein.

Bei einem Zuckeralkohol mit einer Löslichkeit von ≤ 400 g/l in Wasser bei 20°C soll ein Mischungsverhältnis oder Mengenverhältnis von Zuckeralkohol zu Wasser von 1:1,25 oder größer (1:1,24; 1:1,23...) in der Süßware vorhanden sein.

Bei einem Zuckeralkohol mit einer Löslichkeit von ≤ 300 g/l in Wasser bei 20°C soll ein Mischungsverhältnis oder Mengenverhältnis von Zuckeralkohol zu Wasser von 1:1,66 oder größer (1:1,65; 1:1,64;...) in der Süßware vorhanden sein.

Bei einem Zuckeralkohol mit einer Löslichkeit von ≤ 200 g/l in Wasser bei 20°C soll ein Mischungsverhältnis oder Mengenverhältnis von Zuckeralkohol zu Wasser von 1:2,5 oder größer (1:2,4; 1:2,3;...) in der Süßware vorhanden sein.

Bei einem Zuckeralkohol mit einer Löslichkeit von ≤ 150 g/l in Wasser bei 20°C soll ein Mischungsverhältnis oder Mengenverhältnis von Zuckeralkohol zu Wasser von 1:3,33 oder größer (1:3,32; 1:3,31;...) in der Süßware vorhanden sein. Dieses Verhältnis von Zuckeralkohol zu Wasser ist besonders vorteilhaft, wenn als Zuckeralkohol Erythrit genutzt wird.

Bei einem Zuckeralkohol mit einer Löslichkeit von ≤ 100 g/l in Wasser bei 20°C soll ein Mischungsverhältnis oder Mengenverhältnis von Zuckeralkohol zu Wasser von 1:5 oder größer (1:4; 1:3;...) in der Süßware vorhanden sein. Auch hier gilt, dass dieses Verhältnis von Zuckeralkohol zu Wasser besonders vorteilhaft ist, wenn als Zuckeralkohol Erythrit genutzt wird.

Als Süßware wird nach der Erfindung insbesondere eine Süßspeise, eine Backware, insbesondere eine Dauerbackware oder auch eine Praline angesehen. Dem Fachmann ist klar, dass die Erfindung nicht auf die vorstehend aufgeführten Konkretisierungen beschränkt ist.

Nach einer weiteren Fortbildung der Erfindung besitzt das Wasser einen Massenanteil an der Süßware im Bereich von 30-60%, vorzugsweise 35-50%, bevorzugterweise 35-45%. Durch den hohen Anteil an Wasser ist es möglich, eine Süßware zu erlangen, deren Kalorien besonders niedrig sind.

Vorzugsweise besitzt der Zuckeralkohol einen Massenanteil an der Süßware im Bereich von 20-50%, vorzugsweise von 25-40%, bevorzugterweise von 30-40%. Durch diesen Massenanteil von Zuckeralkohol, vorzugsweise Erythritol, wird die für eine Süßware als besonders angenehm empfundene Süße erreicht.

Nach einer vorteilhaften Modifikation der Erfindung besitzt das Verdickungsmittel einen Massenanteil an der Süßware im Bereich von 1,5-20%, vorzugsweise von 1,7-15%, und bevorzugterweise von 2,2-10%. Diese Menge an Verdickungsmittel ist hilfreich, um Wasser zu binden und eine Übersättigung von Zuckeralkohol in Wasser zu vermeiden.

Vorteilhafterweise kann nach der Erfindung vorgesehen sein, dass das Verdickungsmittel Flohsamenschalen ist oder umfasst. Bei der Verwendung von Flohsamenschalen als Verdickungsmittel ergibt sich darüber hinaus ein synergetischer Effekt für die Erfindung, der zur besonders guten Verträglichkeit der Süßware führt.

Es ist bekannt, dass Zuckeralkohole im Vergleich zu anderen Lebensmittelstoffen eine gewisse Obergrenze der digestiven Toleranz haben. Bei einer zu hohen Einnahme können diese eine abführende Wirkung haben, die jedoch für jeden Zuckeralkoholtyp variiert. Dabei spielt aber auch die persönliche Verträglichkeit eine Rolle. Der Vorteil von Flohsamenschalen liegt nun darin, dass diese darmregulierend wirken -sie helfen sowohl bei Diarrhoe als auch bei Obstipation- und so die vom Körper ohne Beschwerden tolerierte Menge an Zuckeralkohol heraufsetzen. Dies ermöglicht einen unbedenklicheren Genuss einer größeren Menge an Zuckeralkohol und führt insgesamt zu einer besonders guten digestiven Verträglichkeit der Süßware.

Vorzugsweise besitzen die Flohsamenschalen einen Massenanteil an der Süßware im Bereich von 1,0-7,5%. Nach einer besonders bevorzugten Ausführungsform beträgt der Massenanteil von Flohsamenschalen an der Süßware 2,0-6,5%. Diese Mengenbereiche haben sich für die Zwecke der Erfindung als vorteilhaft hinsichtlich des Geschmacks und der Bindung von Wasser erwiesen.

Ein weiterer Vorteil bei der Verwendung von Flohsamenschalen ist darin zu sehen, dass Flohsamenschalen im Gegensatz zu anderen bekannten Verdickungsmitteln oder Gelbildern (Gelatine, Agar-Agar, Pektine, Johannesbrotkernmehl, etc.) kein kennzeichnungspflichtiger Zusatzstoff ist, der über ein sogenannte "E-Nummer" verfügt. Flohsamenschalen ist ein natürliches Lebensmittel, das aufgrund seines hohen Ballaststoffgehalts eine besonders gute Quelleigenschaft besitzt und somit viel Wasser binden kann.

Nach einer weiteren Fortbildung der Erfindung weist die Süßware ferner Lupinenmehl auf. Durch die Beigabe von Lupinenmehl zusätzlich zu Flohsamen in das Wasser-Erythrit-Gemisch ergibt sich eine weniger zähe, gummiartige Verbindung, sondern sorgt für eine cremigere Konstitution der Süßware. Dabei ist es von Vorteil, wenn das Lupinenmehl einen Massenanteil an der Süßware im Bereich von 1,5-4,5% ausmacht, vorzugsweise von 2,0-4,5% und bevorzugterweise von 2,0-4,0% ausmacht. In diesen Mengenbereichen ergibt sich ein besonders angenehmes, cremiges Mundgefühl der Süßware.

Weiter ist vorteilhaft, dass Lupinenmehl ähnlich wie Flohsamenschalen nicht als Zusatzstoff gilt, so dass auch hier keine E-Nummer vorliegt. Auch Lupinenmehl ist ein natürliches Lebensmittel, das aufgrund seines hohen Ballaststoffgehalts eine besonders gute Quelleigenschaft besitzt und somit viel Wasser binden kann.

Nach der Erfindung kann vorgesehen sein, dass der Zuckeralkohol Mannit, Maltit, Lactit und/oder Erythrit umfasst oder ist. Nach einer bevorzugten Ausführungsform ist der Zuckeralkohol Erythrit. Erythrit weist einen Süßegrad auf, der ca. 75% der Süße von gewöhnlichem Zucker entspricht weist jedoch eine sehr viel geringere Löslichkeit in Wasser auf. Diese liegt bei 100 g/l in 20°C warmen Wasser.

Vorzugsweise weist die Süßware einen mehrschichtigen Aufbau auf, bei dem die erste Schicht ein Teil der Süßware, insbesondere eine Füllung der Süßware ist, die zweite Schicht eine Zuckeralkoholschicht ist, und die dritte Schicht eine Kakaomasse aus Trockenmasse und Kakaobutter umfasst oder ist, und wobei die zweite Schicht zwischen der ersten und der dritten Schicht angeordnet ist, vorzugsweise direkt zwischen der ersten und der dritten Schicht angeordnet ist.

Dabei kann vorgesehen sein, dass die drei Schichten der Süßware getrennt bleiben. Dies kann dadurch erreicht werden, indem der Teil der Süßware, der die erste Schicht bildet, bereits gesättigt genug an Feststoffen ist. Zudem ist Zuckeralkohol, insbesondere Erythritol, lipophob oder zumindest nicht lipophil und vermischt sich daher auch nicht oder nur in einem vernachlässigbaren Ausmaß mit der Kakaomasse der dritten Schicht. Eine Vermischung der Schichten erfolgt demnach erst beim Reinbeißen in die Süßware.

Die Erfindung betrifft ferner ein Verfahren zum Herstellen einer Süßware. Wie bereits einleitend erläutert kommt es bei der Verwendung von Zuckeralkoholen oftmals zu einem knirschenden oder auch sandigen Mundgefühl. Insbesondere ist dies problematisch, wenn man eine Schokoladenschicht mit Hilfe eines Zuckeralkohols süßen möchte. Dabei ist es gesetzlich vorgeschrieben, dass eine Schokoladenschicht aus Kakaomasse, die die Bestandteile Trockenmasse (Kakaopulver) und Kakaobutter umfasst oder aus diesen besteht, und einer Zuckerart bestehen muss.

Wenn man nun diese drei Bestandteile (Kakaomasse, Kakaobutter und die Zuckerart) miteinander vermengt erhält man keine homogene Masse und hat wiederum das Problem des knirschenden/sandigen Mundgefühls. Auch ein Sieben oder eine Pulverform der Bestandteile ändert hieran nichts.

In der Industrie werden daher diese Mischungen mit Walzen für sehr lange Zeit bearbeitet, so dass die Partikelgröße der Zuckerart derart verringert wird. Aufgrund der verringerten Partikelgröße sind diese für die menschliche Zunge nicht mehr spürbar. Nachteilhaft hieran ist, dass der Aufwand für die Produktion einer solchen Schokoladenmasse sehr hoch ist.

Das beanspruchte Verfahren zum Herstellen einer Süßware löst diese Problematik. Dabei wird ein Verfahren zum Herstellen einer Süßware vorgeschlagen, insbesondere der Süßware nach einer der vorstehend beschriebenen Varianten, das die nachfolgenden Schritte umfasst:
a) Auftragen einer Zuckeralkoholschicht, insbesondere Erythrit, auf einen Teil der Süßware, insbesondere einer Füllung der Süßware, und danach
b) Aufbringen einer Kakaomasse mit maximal 10 Massen% einer Zuckerart, vorzugsweise 5 Massen% einer Zuckerart, bevorzugterweise ohne Zuckerart auf die die Füllung bedeckende Zuckeralkoholschicht.

Vorliegend werden also die die Schokolade ausmachenden Bestandteile nicht miteinander vermengt bzw. durchmischt, sondern es wird auf einen Teil der Süßware, der eine Füllung der Süßware sein kann, eine Zuckeralkoholschicht aufgetragen. Nach dem Aufbringen der Zuckeralkoholschicht wird die Kakaomasse, in die keine Zuckerart eingemischt ist, auf die Zuckeralkoholschicht aufgebracht.

Anstatt einen aufwändigen Vermischungsprozess der Schokoladen im Vorfeld der Verarbeitung auszuführen, wird einfach die Zuckerart, die vorzugsweise Erythritol ist, auf einen Teil der Süßware aufgetragen und mit den restlichen Komponenten von Schokolade überzogen. Die Vermischung der Zuckerart und der anderen Schokoladebestandteile erfolgt dann erst im Mund des Verzehrers, wenn dieser ein Stück der Süßware oder die gesamte Süßware in den Mund nimmt und diese zerkaut. Dadurch wird verhindert, dass sich der bittere Geschmack der ungesüßten Kakaomasse (Kakaopulver und Kakaobutter) entfaltet, wie es eigentlich für eine Kakaomasse ohne Zuckerart typisch wäre. Vorteilhaft ist zudem, dass die angenehme nicht sandige Textur der jeweiligen Schichten (Zuckeralkoholschicht und Kakaomassenschicht) erhalten bleibt und ein angenehmes Mundgefühl erzeugt.

Nach einer vorteilhaften Weiterbildung der Erfindung wird der Zuckeralkohol zum Auftragen auf die Füllung oder den Teil der Süßware in Pulverform auf die Füllung aufgebracht. Das Vorsehen der Pulverform vereinfacht die Handhabung und erleichtert das Aufbringen der Zuckeralkoholschicht.

Ferner kann nach der Erfindung vorgesehen sein, dass die Zuckeralkoholschicht mindestens 0,5 mm dick ist, vorzugsweise mindestens 1,0 mm dick ist. Diese Dicke ist besonders vorteilhaft beim Verzehr und ermöglicht eine ausreichende Durchmischung beim Kauen der Süßware.

Nach einer weiteren Fortbildung der Erfindung ist die Füllung eine an Feststoffen gesättigte Füllung, so dass sich die darauf aufgebrachte Zuckeralkoholschicht nicht mit der Füllung mischt.

Ferner kann vorgesehen sein, dass der Zuckeralkohol lipophob oder nicht lipophil ist und sich dadurch nicht mit der aufgetragenen Kakaomasse mischt.

Vorzugsweise ist vorgesehen, dass die Zuckeralkoholschicht die Füllung umschließt und/oder auf die Füllung aufgestäubt wird.

Nach einer weiteren Modifikation der Erfindung kann die Kakaomasse vor dem Aufbringen auf die Zuckeralkoholschicht erhitzt werden, damit sie in einem flüssigen Zustand aufgegossen werden kann. Dies ermöglicht eine einfachere Handhabung der Verarbeitung.

Zudem kann vorgesehen sein, dass die Süßware einen mehrschichtigen Aufbau aufweist, bei dem die erste Schicht ein Teil der Süßware, insbesondere eine Füllung der Süßware ist, die zweite Schicht eine Zuckeralkoholschicht ist, und die dritte Schicht eine Kakaomasse aus Trockenmasse und Kakaobutter umfasst, und wobei die zweite Schicht zwischen der ersten und der dritten Schicht angeordnet ist, vorzugsweise direkt zwischen der ersten und der dritten Schicht angeordnet ist.

Weitere Merkmale, Vorteile und Besonderheiten der vorliegenden Erfindung werden anhand der nachfolgenden Figurenbeschreibung ersichtlich. Dabei zeigen:
- Fig. 1:: eine Schnittansicht einer erfindungsgemäßen Süßware, und
- Fig. 2:: eine weitere Schnittansicht der erfindungsgemäßen Süßware.

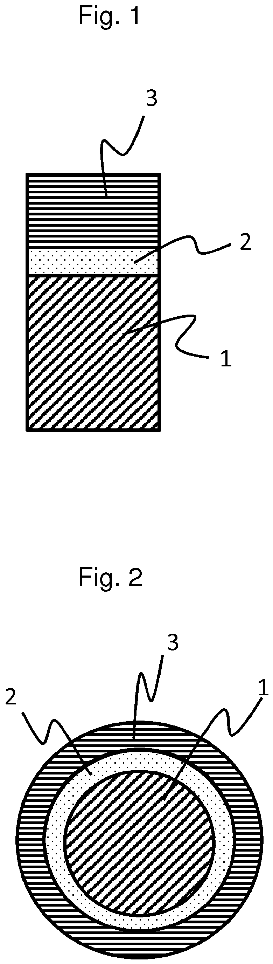

Fig. 1 zeigt eine Schnittansicht einer mehrschichtig aufgebauten Süßware. Die erste Schicht 1, die eine Füllung oder einen anderen Teil der Süßware darstellen kann, ist dabei mit der zweiten Schicht 2 in Kontakt. Diese zweite Schicht 2 ist eine Zuckeralkoholschicht, die typischerweise in Puderform auf die erste Schicht 1 aufgebracht wird. Auf diese zweite Schicht 2 wiederum wird eine dritte Schicht 3 aufgebracht, die Kakaomasse enthält.

Durch die spezifischen Eigenschaften der drei Schichten kommt es nicht oder nur zu einer unwesentlichen Vermischung der Schichten, so dass beim Verzehr der Süßware ein angenehmes Mundgefühl erhalten bleibt, auch wenn in der Süßware mehr Zuckeralkohol vorhanden ist, als durch das darin enthaltene Wasser gelöst werden kann.

Fig. 2 zeigt eine Süßware in Pralinenform, bei der die erste Schicht 1 von der zweiten Schicht 2 vollständig umgeben ist und die zweite Schicht 2 vollständig von der dritten Schicht 3 umgeben ist. Der Vorteil der Pralinenform ist, dass diese in mundgerechten Stücken portioniert ist und damit sichergestellt werden kann, dass der Verzehrer immer mindestens mehr als eine Schicht in den Mund nehmen wird.

Mit Hilfe der nachstehenden Tabelle 1 wird ein Ausführungsbeispiel der Süßware erläutert. Dabei wird dies anhand einer dreischichtigen Praline gemacht, die die in der Tabelle aufgezeigte Zusammensetzung besitzt.

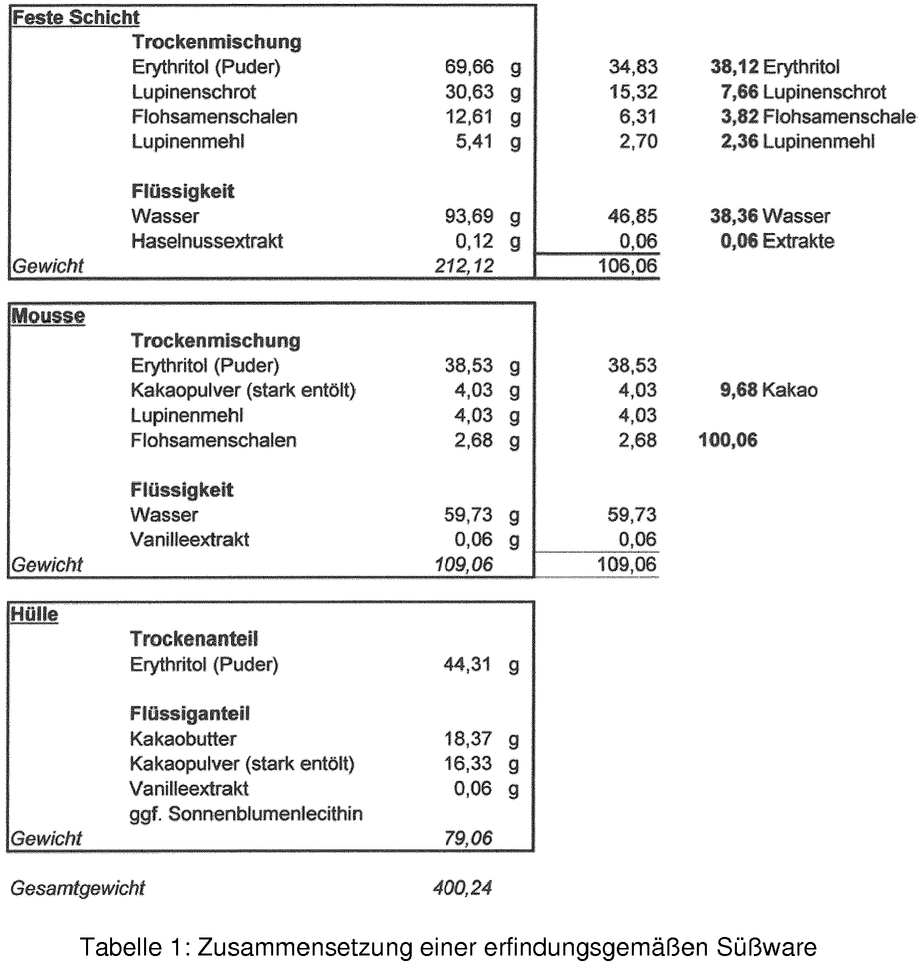

Dabei wird in einem ersten Schritt die Trockenmischung der "festen Schicht" gut durchgemischt und dann mit der Flüssigkeit aus der "festen Schicht" vermengt. Die so erhaltene Gesamtmasse wird anschließend erhitzt und in einer gewünschte Form gebracht.

Die gleichen Zubereitungsschritte werden in analoger Weise für die "Mousse" durchgeführt.

Im Anschlus hieran erfolgt eine Schichtung der "festen Schicht" auf die "Mousse". Je nach Bedarf kann auch eine optionale Schichtung der "festen Schicht" und der "Mousse" erfolgen, die gemäß dem Prinzip "feste Schicht" - "Mousse" - "feste Schicht" erfolgt.

Als nächstes wird dann das Erythritol der "Hülle" in trockener Form auf die "feste Schicht" gestreut.

Dann wird die Kakaobutter erwärmt und mit dem Rest des Flüssiganteils der "Hülle" gut vermengt. Diese Vermengung wird als Überzug für eine Praline genutzt wird, wobei nach dem Aufbringen ein Abkühlen erfolgt.

Bei einer Variation der Herstellung kann das Aufbringen von Erythritol und das Vorsehen des Überzugs wiederholt werden, so dass ein vielschichtigerer Aufbau der Praline erfolgt.

Ebenso kann auch das Erhitzen der festen Schicht und der Mousse erst am Ende nach Überzug mit der Hülle geschehen.

## Patentansprüche

1. Süßware, umfassend:
Wasser,
einen Zuckeralkohol, und
ein Verdickungsmittel, wobei
der Zuckeralkohol in 20°C warmen Wasser eine Löslichkeit aufweist, die kleiner oder gleich 500 Gramm pro ein Liter Wasser ist, und
das Mengenverhältnis von Zuckeralkohol zu Wasser so gewählt ist, dass doppelt so viel oder mehr als doppelt so viel Zuckeralkohol vorhanden ist wie vollständig in der vorhandenen Mengen an Wasser bei 20°C lösbar ist.

2. Süßware nach Anspruch 1, wobei das Wasser einen Massenanteil an der Süßware im Bereich von 30-60%, vorzugsweise 35-50%, bevorzugterweise 35-45% ausmacht.

3. Süßware nach einem der vorhergehenden Ansprüche, wobei der Zuckeralkohol einen Massenanteil an der Süßware im Bereich von 20-50%, vorzugsweise 25-40%, bevorzugterweise 30-40% ausmacht.

4. Süßware nach einem der vorhergehenden Ansprüche, wobei das Verdickungsmittel einen Massenanteil an der Süßware im Bereich von 1,5-20%, vorzugsweise 1,7-15%, bevorzugterweise 2,2-10% ausmacht.

5. Süßware nach einem der vorhergehenden Ansprüche, wobei das Verdickungsmittel Flohsamenschalen ist oder umfasst, und vorzugsweise Flohsamenschalen einen Massenanteil an der Süßware im Bereich von 1-7,5%, oder von 2-6,5% ausmacht.

6. Süßware nach einem der vorhergehenden Ansprüche, wobei das Verdickungsmittel Lupinenmehl ist oder umfasst, wobei vorzugsweise das Lupinenmehl einen Massenanteil an der Süßware im Bereich von 1,5-4,5%, vorzugsweise von 2,5-4,5% und bevorzugterweise von 3,0-4,0% ausmacht.

7. Süßware nach einem der vorhergehenden Ansprüche, wobei der Zuckeralkohol Mannit, Maltit, Lactit und/oder Erythrit umfasst oder ist, vorzugsweise wobei der Zuckeralkohol Erythrit ist.

8. Süßware nach einem der vorhergehenden Ansprüche, wobei die Süßware einen mehrschichtigen Aufbau aufweist, bei dem die erste Schicht ein Teil der Süßware, insbesondere eine Füllung der Süßware ist, die zweite Schicht eine Zuckeralkoholschicht ist, und die dritte Schicht eine Kakaomasse aus Trockenmasse und Kakaobutter ist, und wobei die zweite Schicht zwischen der ersten und der dritten Schicht angeordnet ist, vorzugsweise direkt zwischen der ersten und der dritten Schicht angeordnet ist.

9. Verfahren zum Herstellen einer Süßware, insbesondere der Süßware nach einem der vorhergehenden Ansprüche, umfassend die Schritte:
Auftragen einer Zuckeralkoholschicht, insbesondere Erythrit, auf eine Füllung der Süßware, und danach
Aufbringen einer Kakaomasse mit maximal 10 Massen% einer Zuckerart, vorzugsweise 5 Massen% einer Zuckerart, bevorzugterweise keiner Zuckerart auf die die Füllung bedeckende Zuckeralkoholschicht.

10. Verfahren nach Anspruch 9, wobei der Zuckeralkohol zum Auftragen auf die Füllung in Pulverform auf die Füllung aufgebracht wird.

11. Verfahren nach einem der vorhergehenden Ansprüche 9 oder 10, wobei die Zuckeralkoholschicht mindestens 0,5 mm dick ist, vorzugsweise mindestens 1,0 mm dick ist.

12. Verfahren nach einem der vorhergehenden Ansprüche 9 bis 11, wobei die Füllung eine an Feststoffen gesättigte Füllung ist, so dass sich die darauf aufgebrachte Zuckeralkoholschicht nicht mit der Füllung mischt.

13. Verfahren nach einem der vorhergehenden Ansprüche bis 12, wobei der Zuckeralkohol lipophil ist und sich dadurch nicht mit der aufgetragenen Kakaomasse mischt.

14. Verfahren nach einem der vorhergehenden Ansprüche 9 bis 13, wobei die Zuckeralkoholschicht die Füllung umschließt und/oder auf die Füllung aufgestäubt wird.

15. Verfahren nach einem der vorhergehenden Ansprüche 9 bis 14, wobei die Süßware einen mehrschichtigen Aufbau aufweist, bei dem die erste Schicht eine Füllung der Süßware ist, die zweite Schicht eine Zuckeralkoholschicht ist, und die dritte Schicht eine Kakaomasse aus Trockenmasse und Kakaobutter ist, und wobei die zweite Schicht zwischen der ersten und der dritten Schicht angeordnet ist, vorzugsweise direkt zwischen der ersten und der dritten Schicht angeordnet ist.
